(19) Europäisches Patentamt
European Patent Office
Office européen des brevets

(11) **EP 2 647 419 A1**

(12) **EUROPÄISCHE PATENTANMELDUNG**

(43) Veröffentlichungstag:
**09.10.2013 Patentblatt 2013/41**

(51) Int Cl.:
*B01D 67/00* (2006.01)     *B01D 53/22* (2006.01)
*B01D 69/10* (2006.01)     *B01D 71/02* (2006.01)
*C01B 13/02* (2006.01)

(21) Anmeldenummer: **13001473.1**

(22) Anmeldetag: **22.03.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **04.04.2012 DE 102012006744**

(71) Anmelder: **Forschungszentrum Jülich GmbH
52425 Jülich (DE)**

(72) Erfinder:
• **Baumann, Stefan
  52078 Aachen (DE)**
• **Zotov, Nikolay
  70569 Stuttgart (DE)**
• **Meulenberg, Wilhelm Albert
  6294 AA Vijlen (NL)**
• **Vaßen, Robert
  52134 Herzogenrath (DE)**
• **Buchkremer, Hans Peter
  52525 Heinsberg-Schafhausen (DE)**

(54) **Gemischt Ionen und Elektronen leitende Membran zur Gastrennung sowie Verfahren zur Herstellung derselben**

(57)     Die Erfindung betrifft eine asymmetrische Membran umfassend eine poröse Trägerstruktur mit einer darauf angeordneten Funktionsschicht, die durch eine metallische Trägerstruktur gekennzeichnet ist, wobei optional auch noch eine keramische Zwischenschicht zwischen der metallischen Trägerstruktur und der Funktionsschicht vorgesehen sein kann. Erfindungsgemäß weist diese asymmetrische Membran bei Temperaturen oberhalb von 750 °C einen Permeationsfluss von wenigstens 0,1 ml /(cm$^2$ * min) und bei Temperaturen oberhalb von 850 °C einen Permeationsfluss von wenigstens 0,2 ml /(cm$^2$ * min) auf. Als besonders geeignete metallische Trägerstruktur hat sich eine Ni/Co-Basislegierung mit einem Al-Anteil von mehr als 4 Gew.-%, insbesondere eine NiCoCrAlY- oder FeCrAlY-Legierung herausgestellt, die an Luft bei Temperaturen oberhalb von 600 °C eine stabile Oxidschicht auszubilden vermag. Ebenfalls vorteilhaft ist eine Funktionsschicht umfassend $La_{0,58}Sr_{0,4}Co_{0,2}Fe_{0,8}O_{3-\delta}$ (LSCF) oder $Ba_{0,5}Sr_{0,5}Co_{0,8}Fe_{0,2}O_{3-\delta}$ (BSCF), die mit einer Schichtdicke zwischen 0,3 und 200 μm aufgebracht wird, wodurch ohne weitere sich anschließende Prozessschritte eine gasdichte Funktionsschicht erzeugt wird. Optional kann auch noch eine keramische Zwischenschicht, vorteilhaft aus einem ebenfalls gemischt Ionen und Elektronen leitenden Material vorgesehen werden.

EP 2 647 419 A1

**Beschreibung**

Die Erfindung betrifft eine Membran aus einem gemischt Ionen und Elektronen leitenden (MIEC = mxed ionic electronic conducting) Material, insbesondere eine Membran, die vorzugsweise zu Gastrennzwecken eingesetzt wird.

Ferner betrifft die Erfindung ein Verfahren zur Herstellung einer solchen MIEC-Membran.

Stand der Technik

Gemischt Ionen und Elektronen leitende (MIEC)- Materialen sind zunächst wegen Ihrer möglichen Anwendungen und später wegen ihrer Eigenschaften untersucht worden. Der Schwerpunkt lag dabei auf dem Einsatz in elektrochemischen Zellen, in denen MIEC- Materialien als Elektroden eingesetzt wurden.

Membranen aus einem MIEC-Material eignen sich als Filter für molekularen Sauerstoff und können sowohl für die selektive Abtrennung als auch für die selektive Dosierung von Sauerstoff verwendet werden. Einsatzgebiete sind die Erzeugung hoch reiner Gase für medizinische Anwendungen, Aqua-Kulturen, Reaktionsprozesse und Abgasreinigung.

Bei der $O_2/N_2$- Trennung mit Hilfe von Membranen werden derzeit keramische Membrantypen auf Basis von gemischt Ionen und Elektronen leitenden (MIEC)- Materialen entwickelt. Verschiedene Patente befassen sich bereits mit dem (theoretischen) Aufbau als geträgerte Membranschicht.

Aus EP 0 732 139 B2 ist beispielsweise ein röhrenförmiges Membranmodul bekannt, mit dem Sauerstoff aus einem sauerstoffhaltigen Gas abgetrennt werden kann. Das Membranmodul umfasst eine Vielzahl von röhrenförmigen Festkörpermembraneinheiten, die aus einem bei erhöhten Temperaturen gemischt Ionen und Elektronen leitenden (MIEC)- Material bestehen. Vorteilhaft sind als Trägerstruktur ebenfalls MIEC- Materialien mit ähnlichem thermischen Ausdehnungskoeffizienten wie die dichte Funktionsschicht vorgesehen, es können aber auch Träger umfassend Aluminium, Cer, Silizium, Magnesium, Titan, hochtemperaturstabile Metalllegierungen oder stabilisierte Zirkoniumoxide sowie Mischungen daraus verwendet werden. Die theoretische Schichtdicke der dichten Funktionsschicht wird mit 0, 01 bis 500 μm angegeben, für einen realistischen Sauerstofffluss sind jedoch Schichtdicken < 100 μm erforderlich. Das Verhältnis der Schichtdicken von dichter Funktionsschicht zu der sie unterstützenden Trägerstruktur sollte zwischen 3: 1 und 6: 1 liegen.

Aus WO 2005/009730 A1 ist ebenfalls ein Sauerstoffionen leitendes Kompositelement bekannt, welches eine dichte Schicht aus einem gemischt Ionen und Elektronen leitenden (MIEC)- Material sowie eine poröse Schicht als mechanischen Träger aufweist. Der Träger kann dabei aus einer Oxid- verstärkten Metall- Legierung oder einer Oxidverstärkten Keramik aufgebaut sein.

In WO 01/93987 wird ein Verfahren zur Abtrennung von Sauerstoff aus einem sauerstoffhaltigen Gas mittels einer Membran beschrieben, wobei die Membran aus einer dichten Schicht, wenigstens einer daran angeordneten porösen Zwischenschicht und wenigstens einer daran angeordneten porösen Trägerschicht aufgebaut sein soll. Konkrete Materialien für die einzelnen Schichten werden nicht offenbart.

Grundsätzlich unterscheidet man dabei die asymmetrischen mischleitenden Membranen (dünne Gastrennende Schicht auf porösem Träger) im Vergleich zu den monolithischen Membranen, die im Endzustand eine untrennbare Einheit bilden, d. h. aus einem Stück bestehen. Aufgrund ihrer wesentlich geringeren Schichtdicke (< 100 μm) weisen asymmetrische mischleitende Membranen in der Regel eine erhöhte $O_2$-Permeation auf. Eine weitere Steigerung durch poröse, katalytisch wirkende Beschichtungen ist möglich.

Die Entwicklung befasst sich derweil mit materialwissenschaftlichen Grundlagen sowie dem Bau erster, nicht optimierter Moduleinheiten (z. B. OXYCOAL- AC, MEMBRAIN) . Diese arbeiten im Wesentlichen mit dickwandigen (- 0.5 mm) dichten Membraneinheiten aus Perowskit. Air Products and Chemicals Inc. (Allentown, USA) betreiben ein PilotModul, in dem asymmetrische Membranen aus verschiedenen Schichten ein und desselben Werkstoffs aus der Gruppe der Perowskite für die Abtrennung reinen Sauerstoffs aus Luft eingesetzt werden. Dabei wird der poröse Träger von der dichten Membranschicht komplett umschlossen und durch eine zentrale Durchführung wird der Sauerstoff mittels eines leichten Vakuums abgesaugt (3- End- Betrieb) . Dadurch ist der Aufbau für Membranreaktoren nicht geeignet. Bei solchen Membranreaktoren ist es zwingend erforderlich, dass nicht nur auf der Luftseite, sondern auch auf der Permeatseite ein Gas oder Gasgemisch vorbei strömt (4- End- Betrieb) . Ferner wird dort mit einem arteigenen Träger gearbeitet, d. h. der Träger besteht aus demselben Material wie die Membranschicht, womit große Herausforderungen bzgl. chemischer Verträglichkeit sowie unterschiedlicher Ausdehnungskoeffizienten der Materialien umgangen werden. Erste Ansätze einer metallisch gestützten Membran über die klassische Sinterroute führten nicht zu dem erwünschten Erfolg (Y. Xing, S. Baumann, D. Sebold, M. Rüttinger, A. Venskutonis, W. A. Meulenberg, D. Stöver, "Chemical compatibility investigation of thin- film oxygen transport membrane on metallic substrates". Journal of the American Ceramic Society 94 (3), (2011) 861- 866) .

Die notwendige Optimierung der in der Entwicklung befindlichen Einheiten umfasst neben dem Upscaling und der Stabilitätserhöhung in realen Prozessbedingungen (mechanisch, thermisch, chemisch) die Entwicklung dünner Membranen mit geeigneten - meist perowskitischen - Trägermaterialien. Eine metallisch gestützte Membranschicht konnte bisher nicht in ausreichender Qualität realisiert werden.

Sulzer Metco hat eine Variante des Plasmaspritzens weiterentwickelt (low pressure plasma spraying - thin film, LPPS-TF), um die Lücke zwischen klassischer Dünnschichttechnologie (z. B. PVD) mit Schichtdicken bis einige $\mu$m und dem normalen Plasmaspritzen (Dickschichttechnologie) mit Schichtdicken ab ca. 100 $\mu$m zu schließen. Hierzu werden die Pulverpartikel nicht nur aufgeschmolzen sondern teilweise verdampft und mit hoher Geschwindigkeit auf ein (heißes) Substrat gespritzt. Außerdem ermöglicht das LPPS-TF dichte Schichten an Stelle der normalerweise porösen Schichten abzuscheiden.

Allerdings gibt es bestimmte Anwendungen, die eine gasdichte Beschichtung im sub- $\mu$m-Bereich benötigen. Diese werden regelmäßig bei geringen Depositionsraten hergestellt, wie beispielsweise durch physikalische oder chemische Vakuumabscheidung (CVD oder PVD). Diese Art der Beschichtung kann bislang nicht mit herkömmlichen thermischen Spritzverfahren erzielt werden. Insbesondere mit dem LPPS-TF ist es noch nicht möglich, gasdichte Schichten herzustellen, die dünner als 5 bis 10 $\mu$m sind (M. Gindrat, H.-M. Höhle, K. von Niessen, Ph. Guittienne, D. Grange and Ch. Hollenstein, "Plasma Spray-CVD: A New Thermal Spray Process to Produce Thin Films from Liquid or Gaseous Precursors", Submitted December 14, 2010; in revised form March 22, 2011, Journal of Thermal Spray Technology, Volume 1 / 1992 - Volume 21 / 2012.)

Alle bisher entwickelten monolithischen Membranen (d. h. Schichtdicken > 0,5 mm) haben regelmäßig noch zu geringe Permeationsraten und/oder sind bei den diskutierten Anwendungsbedingungen nicht ausreichend stabil gegenüber den thermo-chemischen und thermomechanischen Anforderungen.

Für die Herstellung asymmetrischer Membranen (Schichtdicke < 100 $\mu$m) aus den Werkstoffen mit den bislang höchsten Permeationsraten (Perowskite) werden auf Grund deren außergewöhnlichem thermischem und chemischem Ausdehnungsverhalten derzeit nur arteigene poröse Träger verwendet, die häufig eine unzureichende chemische und insbesondere mechanische Stabilität aufweisen und zudem sehr teuer sind. Außerdem werden bisher nur Verfahren angewandt, die zur Verdichtung eine Hochtemperaturbehandlung (Sintern) benötigen, die mit einer Schwindung einhergehen und deshalb zu Rissen führen. Es kommt ebenfalls zur Verdichtung des Trägers sowie zu Reaktionen von Membranschicht und Träger, die zusätzlich zur Verringerung der Permeationsrate führen.

Das LPPS_TF bietet eine Möglichkeit, dichte Schichten ohne eine weitere Sinterbehandlung abzuscheiden. Allerdings ist nicht jedes Material abscheidbar, da die Kristallstruktur zumindest temporär zerstört wird und man sicherstellen muss, dass diese wieder regeneriert. Außerdem wird das (für die Membranen poröse) Substrat einer sehr hohen thermischen (T = 700 °C - 1000 °C) und mechanischen Belastung (hohe Plasma- und Partikelgeschwindigkeit) ausgesetzt, was bei zu spröden Substraten (z. B. einige Keramiken) zum Bruch und bei zu duktilen Substraten (z. B. Hastelloy X) zu einer oberflächennahen Verdichtung führen kann. Letzteres führt letztlich dazu, dass nur eine sehr geringe oder gar keine SauerstoffPermeation nachgewiesen werden kann.

Aus V. V. Kharton, F. M. B. Marques, "Mixed ionic-electronic conductors: effects of ceramic microstructure on transport properties", Current Opinion in Solid State and Materials Science, Volume 6, Issue 3, June 2002, Pages 261-269, ist bekannt, dass dichte keramische Membranen aus einem MIEC-Material im Bezug auf Sauerstoff einen unendlich großen theoretischen Trenngrad aufweisen, und daher bevorzugt in integrierten Systemen zur Sauerstoffabtrennung, bei der Dampfreformierung und bei der partiellen Oxidation von Erdgas zu Synthesegas eingesetzt werden.

Badwell et al. berichten in S. P. S. Badwal, F. T. Ciacchi, "Ceramic Membrane Technologies for Oxygen Separation", Advanced Materials (2001), Vol. 13, Pages 993-996, über den Einsatz einer elektrochemischen Zelle basierend auf einem Sauerstoffionen leitenden Festelektrolyten, die den selektiven Transport von Sauerstoff in Form von Sauerstoffionen mit einer hohen Flussrate bei hohen Temperaturen ermöglicht. Der Festelektrolyt besteht dabei aus einem reinen Ionenleiter oder einem gemischt Ionen und Elektronen leitenden Material.

Es ist bekannt, dass die Filtrationsstromdichte einer Membran, wie aus den Transportgleichungen hervorgeht, der Dicke der Membran umgekehrt proportional ist. Aus wirtschaftlichen Gründen sollte die Filtrationsstromdichte dabei möglichst groß sein, d. h., die eigentliche Membran sollte möglichst dünn ausgestaltet sein. Beim derzeitigen Stand der Technik ist es bislang nicht möglich, perowskitische Membranen als selbsttragende Folien, die dünner als etwa 500 $\mu$m sind, in größerem Maßstab fehlerfrei herzustellen. Um wirtschaftlich tragbare Filtrationsstromdichten zu erreichen, darf die Membran aber nicht wesentlich dicker als 0,1 bis 500 $\mu$m, vorteilhaft nicht dicker als 200 $\mu$m sein. Mit asymmetrischen Membranen werden diese Schwierigkeiten überwunden.

Aus der Literatur sind bereits asymmetrische Membranen bekannt, bei denen die eigentliche Gastrennschicht (Funktionsschicht) aus Stabilitätsgründen auf einem porösen Träger angeordnet ist. Die Gesamtdicke der asymmetrischen Membran beträgt 0,1 bis 2,5 mm. Ihre Struktur besteht aus einem relativ dicken, hochporösen Unterbau (Trägerstruktur) und einer extrem dünnen Haut (Membran) von 10 bis 500 $\mu$m an der Oberseite.

In der Literatur wird über Membranen auf Perowskitbasis berichtet, die bekanntermaßen eine sehr gute Permeationsrate für Sauerstoff aufweisen, und die auf Grund ihres außergewöhnlichen thermischen Ausdehnungsverhaltens nur auf einem arteigenen Träger, das bedeutet einem Träger aus demselben oder einem ähnlichen Material, angeordnet sind. Nachteilig weisen diese Trägerstrukturen häufig eine nur unzureichende chemische und insbesondere mechanische Stabilität auf.

Es hat sich herausgestellt, dass Herstellungsverfahren für asymmetrische Membranen, bei denen zur späteren Verdichtung der Funktionsschicht eine Hochtemperaturbehandlung (Sinterschritt) notwendig ist, diese regelmäßig mit einer Schwindung einhergeht, die wiederum nachteilig zu Rissen in der Funktionsschicht und/oder der Trägerstruktur führen.

Zudem ist bekannt, dass keramische Trägerstrukturen von Natur aus spröde sind, und daher mechanischen Verformungen nur in sehr geringem Maße widerstehen können. Ihre Duktilität ist im Vergleich zu metallischen Materialien sehr gering.

Eine Alternative zur Herstellung einer dünnen gasdichten asymmetrischen Membran auf einem keramischen Träger könnte daher der Einsatz eines metallischen Trägers sein, da dieser bekanntermaßen auch bei hohen Temperaturen thermisch stabil ist, eine deutlich bessere mechanische Stabilität auch bei geringen Schichtdicken aufweist, und bei hohen Temperaturen keinerlei Schwindung zeigt.

Eine zwingende Anforderung an die Trägerstruktur für eine asymmetrische Membran ist unter anderem, dass die sehr dünne, meist nur zwischen 0,1 und 500 $\mu$m dicke, vorteilhaft nicht mehr als 200 $\mu$m dicke, keramische Funktionsschicht gasdicht darauf aufgebracht werden kann. Dazu dürfen die Porengrößen der Trägerstruktur nicht zu groß sein, da andernfalls beim Aufbringen einer weiteren Schicht, welche entweder bereits die Funktionsschicht oder auch eine dünne Zwischenschicht sein kann, diese zunächst die oberflächennahen Poren auffüllen müsste. Dies führt aber regelmäßig zu Defekten in der Schicht, wenn das Schichtdicken-Porengrößen-Verhältnis deutlich unter 10 liegt.

Daher wäre eine Trägerstruktur zu wünschen, die zwar eine Porosität von wenigstens 30 Vol.-% aufweist, um eine Transporthemmung durch die Trägerstruktur zu verhindern, dabei aber regelmäßig nur Porengrößen mit einem maximalen Porendurchmesser von 5-10 $\mu$m aufweist, um die Aufbringung einer dünnen Folgeschicht zu ermöglichen.

Diese Anforderungen können durch keramische Materialien, wie beispielsweise Zirkonoxid, Aluminiumoxid oder Magnesiumoxid leicht erfüllt werden, da bei der Herstellung feinste Partikel mit einem Partikeldurchmesser von wenigen Mikrometern eingesetzt werden können.

Eine vergleichbare Herstellung für metallische Substrate mit gleicher Porosität und Porengröße ist bislang jedoch noch nicht verfügbar.

Aus einer Dissertation von Ye XING " Development of Thin Film Oxygen Transport Membranes on Metallic Supports", Bochum, Ruhr Universität, 2011, ist bereits eine asymmetrische Membran zur Gastrennung mit einer metallischen poröser Trägerstruktur und einer darauf aufgebrachten Funktionsschicht bekannt. Die Trägerstruktur weist eine Schichtdicke von 1 mm auf. Die Funktionsschicht umfasst eine MIEC-Material und weist eine Schichtdicke von 1 □m auf. Zudem wurden vielversprechende Permeationsuntersuchungen zu dem verwendeten MIEC-Material in Form einer gepressten Tablette mit einer Dicke von 1 mm durchgeführt.

Aufgabe und Lösung

Die Aufgabe der Erfindung ist es, eine langzeitstabile dünne und gleichzeitig gasdichte Gastrennmembran auf einem porösen Träger (asymmetrische Membran) zur Verfügung zu stellen, die $O_2$ oder auch $H_2$ aus Gasgemischen, wie beispielsweise Luft oder Synthesegas, selektiv und effektiv abtrennen kann, insbesondere auch bei hohen Temperaturen zwischen 600 °C und 900 °C und reduzierenden Umgebungsbedingungen.

Eine weitere Aufgabe der Erfindung ist es, ein entsprechendes Verfahren zur Herstellung einer solchen dünnen asymmetrischen Gastrennmembran bereit zu stellen.

Die Aufgaben der Erfindung werden gelöst durch die Gegenstände mit den Merkmalen der unabhängigen Ansprüche. Vorteilhafte Ausgestaltungen der Membran oder des Herstellungsverfahren finden sich in den jeweils darauf rückbezogenen Unteransprüchen.

Gegenstand der Erfindung

Der Gegenstand der Erfindung ist eine langzeitstabile dünne und gleichzeitig gasdichte Gastrennmembran auf einem porösen Träger (asymmetrische Membran).

Die Trennung der Gase in der vorliegenden Erfindung beruht auf einer gemischten Ionen- und Elektronenleitung (mixed ionic electronic conductor, MIEC). Dadurch erhält man einen theoretisch unendlich hohen Trennfaktor. Die Permeationsrate ist im Wesentlichen abhängig von Membranmaterial, Temperatur, Membrandicke, Membranoberfläche und den Partialdruckverhältnissen des zu transportierenden Gases (z. B. $O_2$ oder $H_2$) an beiden Seiten der Membran. Ziel einer Membranentwicklung muss es deshalb sein, eine möglichst dünne und gleichzeitig gasdichte Membran auf einem porösen Träger abzuscheiden (asymmetrische Membran), die den Umgebungsbedingungen im Langzeitbetrieb (10.000 h - 100.000 h) deutlich besser standhält, als nach dem Stand der Technik bekannt ist.

Hierzu umfasst die erfindungsgemäße Membran ein metallisches Substrat, was auf Grund der stark unterschiedlichen Materialeigenschaften von keramischer Membran als Funktionsschicht und metallischem Substrat als Träger eine ausgesprochene Herausforderung darstellt. Während der Herstellung ist zu gewährleisten, dass die Membranschicht gasdicht wird, während das Substrat komplett porös bleiben muss, um eine gute Durchströmbarkeit zu gewährleisten. Zudem muss das Membranmaterial unter Anwendungbedingungen stabil sein. Insbesondere dürfen angelegte Partialdruckgradienten nicht zur Zerstörung der Kristallstruktur führen.

Unter Gasdichtigkeit der Membran wird im Rahmen der Erfindung eine He-Leckrate unter Standardbedingungen von weniger als $10^{-4}$ mbar * l/(cm$^2$ * s) verstanden.

Als geeignete metallische Trägermaterialien haben sich für die Erfindung insbesondere Legierungen auf Basis von NiCoCrAlY, CoNiCrAlY, NiAl oder auch FeCrAlY herausgestellt.

Als geeignete Membranmaterialien kommen Perowskite mit der allgemeinen Zusammensetzung (AA'BB'O$_3$), z. B. La$_{1-x}$Sr$_x$Co$_{1-y}$Fe$_y$O$_{3-\delta}$ (LSCF), Ba$_{1-x}$Sr$_x$Co$_{1-y}$Fe$_y$O$_{3-\delta}$ (BSCF) in Frage. Ferner können auch Fluorite wie beispielsweise dotierte Ceroxide, z. B. Ce$_{1-x}$Gd$_x$O$_{2-\delta}$ (CGO) oder Ce$_{1-x}$Pr$_x$O$_{2-\delta}$ (CPO) eingesetzt werden.

Auf Grund der unterschiedlichen thermischen Ausdehnungskoeffizienten der vorgenannten Materialien sind dabei bestimmte Kombinationen besonders günstig, wie beispielsweise ein poröser NiCoCrAlY-Träger mit einer gasdichten LSCF-Membranschicht.

| Trägermaterial | Membranmaterial |
| --- | --- |
| NiCoCrAlY | Perowskite (AA'BB'O$_3$), z.B. LSCF, BSCF etc. |
| CoNiCrAlY | Perowskite (AA'BB'O$_3$), z.B. LSCF, BSCF etc. |
| NiAl | Perowskite (AA'BB'O$_3$), z.B. LSCF, BSCF etc. |
| FeCrAlY | Fluorite, dotiertes Ceroxid, z. B. CGO oder CPO etc. |

Beim Verfahren zur Herstellung einer solchen asymmetrischen metallgestützten Membran kann für das Aufbringen der einzelnen Schichten vorteilhaft auf bereits bekannte Verfahren zurückgegriffen werden. Für die Abscheidung von sehr dünnen, gasdichten keramischen Schichten unterhalb von 100 μm kommt vorzugsweise das low pressure plasma spraying - thin film (LPPS-TF) zum Einsatz.

Nachfolgend wird das erfindungsgemäße Verfahren zur Herstellung der Gastrennmembran in einzelnen Verfahrensschritten vorgestellt.

Als Substrat wird ein Träger aus Metall verwendet, der zusätzlich der zur Durchströmung notwendigen Porosität eine ausreichende mechanische Stabilität aufweist. Die Porosität sollte daher bei mehr als 30 Vol.-%, besser noch bei mehr als 35 Vol.-% liegen, optimal sogar bei ca. 40 Vol.-%. Die Poren weisen durchschnittlich Durchmesser zwischen 20 und 100 μm auf, insbesondere zwischen 20 und 35 μm. Es handelt sich dabei um durchgängige Poren.

Eine relevante Größe zur Charakterisierung des Trägers ist die N$_2$- Durchströmbarkeit, die für den metallischen Träger mehr als 20 ml/ (min*cm*bar) betragen sollte. Besonders vorteilhaft sind Durchströmbarkeiten von mehr als 50 ml/ (min*cm*bar) . Bei den Zahlenangaben handelt es sich um bereits auf die Schichtdicke (cm) und Druckdifferenz (bar) normierte Werte. Der metallische Träger weist in der Regel eine Schichtdicke zwischen 200 μm und 2 mm, vorteilhaft von ca. 1 mm auf.

Der metallische Träger muss ferner eine ausreichende Oxidationsbeständigkeit bei hohen Temperaturen aufweisen. Hierzu sollte bei den vorgenannten Trägermaterialien durch Erhitzen an Luft auf hohe Temperaturen von z. B. 1000 °C eine stabile Oxidschicht z. B. aus □-Al$_2$O$_3$ erzeugt werden, die kein Cr$_2$O$_3$ aufweisen sollten. Außerdem muss der thermische Ausdehnungskoeffizient des porösen Trägers an den des Membranmaterials angepasst und insbesondere größer als 10 bis 16* $10^{-6}$ K$^{-1}$ sein. Vorteilhaft sollte die Differenz der thermischen Ausdehnungskoeffizienten zweier benachbart angeordneter Schichten nicht größer als 3 * $10^{-6}$ K$^{-1}$ betragen.

Des Weiteren sollte das Material eine sehr geringe plastische Verformbarkeit bei Beschichtungstemperaturen von 700 - 1000°C aufweisen. Erfindungsgemäß wird in einer bevorzugten Ausgestaltung eine Ni/Co-Basis-Legierung mit hohem Al-Anteil > 3 Gew.-% (NiCoCrAlY) oder auch (CoNiCrAlY) verwendet. Das Nickel in der Legierung kann vorteilhaft im Falle des Einsatzes als Membranreaktor auch gleichzeitig als Katalysator für bestimmte Reaktionen, z. B. partielle Oxidation von Methan, dienen. Auch andere Werkstoffe, die diese Bedingungen erfüllen, z. B. FeCrAlY oder auch NiAl, sind als metallische Träger geeignet und weisen eine ausreichende Oxidationsbeständigkeit und Festigkeit auf. Der Träger kann bei Bedarf auch mit gradierter Porosität aufgebaut werden und aus einer Strukturkeramik oder einem Cermet bestehen. Cermets sind Verbundwerkstoffe aus keramischen Werkstoffen in einer metallischen Matrix. Sie zeichnen sich durch eine besonders hohe Härte und Verschleißfestigkeit aus.

Auf die Trägerstruktur wird in einer speziellen vorteilhaften Ausführung, die aber nicht zwingend ist, eine keramische Zwischenschicht mit Poren im Bereich von 0,1 bis 5 μm aufgebracht. Die Porosität sollte ähnlich wie bei Träger mehr als 30 Vol.-%, besser noch mehr als 35 Vol.-% liegen, optimal sogar bei ca. 40 Vol.-%. Die Zwischenschicht besteht aus einem katalytisch wirkenden Material, das kinetische Hemmnisse beim Sauerstoffaustausch mit der anliegenden Gasphase reduziert. Das Material der Zwischenschicht sollte weder mit dem Träger noch mit der funktionalen Schicht chemische Reaktionen zeigen, die die Funktion des Gesamtsystems im Langzeitbetrieb gefährden. Insofern sind die für die membrangeeigneten MIEC-Materialien, wie z. B. LSCF, in der Regel auch als Zwischenschicht geeignet. Die Zwischenschicht weist in der Regel eine Schichtdicke zwischen 1 und 10 $\mu$m auf. Bevorzugte Aufbringungsverfahren wäre beispielsweise Nasspulverspritzen, thermische Spritzverfahren insbesondere mit flüssigen Ausgangsstoffen, Siebdruck oder auch Foliengießen.

Die für die Gastrennung erforderliche funktionale Schicht (Membranschicht) aus einem mischleitenden Material, z. B. einem Perowskit, wird mittels LPPS-TF mit einer Dicke von 1 bis 500 $\mu$m, vorteilhaft von 10 bis 70 $\mu$m aufgebracht. Der laminare Plasmastrahl transportiert die Pulverpartikel im Vakuum mit sehr hoher Geschwindigkeit zum Substrat, wo sich die Membranschicht abscheidet. Dieses Verfahren hat den Vorteil, dass kein zusätzlicher Sinterschritt zum Verdichten der Schicht notwendig ist. Die Membranschicht ist bereits nach dem Abscheiden gasdicht und gut mit dem Trägersubstrat verbunden. Die Gasdichtigkeit kann anhand eines He-Lecktestes überprüft werden und sollte weniger als $10^{-4}$ mbar $* l / (cm^2 * s)$ liegen. Die Porosität sollte dementsprechend bei unter 5 Vol.-% liegen, wobei nur geschlossene Poren auftreten dürfen.

Falls für die so hergestellte keramische Membran die Gefahr besteht, dass sie unter Einsatzbedingungen dennoch Stabilitätsprobleme aufweisen könnte, weil sie beispielsweise mit Bestandteilen der anliegenden Gasphase wie $CO_2$ oder $SO_2$ im Rauchgas reagiert oder sich bei niedrigen Sauerstoff-Partialdrücken zersetzt, könnte optional zusätzlich eine sehr dünne dichte Schutzschicht aus einem anderen mischleitenden Material auf die gasdichte Membranschicht aufgebracht werden. Als Herstellverfahren für diese Schutzschicht bietet sich neben dem Sol-Gel-Verfahren oder dem Tintenstrahldrucken eine Abscheidung aus der Gasphase (PVD, CVD, PLD = pulsed laser deposition) an.

Eine weitere Optimierungsmöglichkeit für die erfindungsgemäße Gastrennmembran ist es, zur Überwindung kinetischer Hemmnisse beim Sauerstoffaustausch mit der anliegenden Gasphase, eine zusätzliche poröse katalytisch wirkende Schicht (Oberflächenschicht) auf die Membranschicht aufzubringen, wie sie auch als optionale Zwischenschicht bereits beschrieben wurde. Diese Schicht kann mittels Siebdruck, Spritzverfahren oder Sol-Gel-Verfahren aufgebracht werden. Als Materialien kommen alle Materialien wie für die Zwischenschicht in Betracht. Die Beschaffenheit bezüglich der Parameter Porosität, Porengröße und Schichtdicke sind wie bei den Zwischenschichten.

In einer besonders vorteilhaften Ausgestaltung der Erfindung weisen diese Oberflächenschicht und die Membranschicht der Gastrennmembran dasselbe Material auf. Insbesondere kann auch eine optionale Zwischenschicht aus ebenfalls demselben Material bestehen. In diesem Fall würde sich ein dreilagiges Schichtsystem aus demselben MIEC-Material auf der Oberfläche des metallischen Trägers ergeben, bei dem die Membranschicht gasdicht, die Zwischenschicht und die Oberflächenschicht jedoch auf Grund der unterschiedlichen Aufbringungsverfahren jeweils porös ausgestaltet sind.

Die erfindungsgemäße keramische Membran löst die Aufgabe der Separation von $O_2$ oder $H_2$ aus Gasgemischen z. B. Luft (im Wesentlichen $N_2 + O_2$) oder Synthesegas (ungeshiftet im Wesentlichen $H_2 + CO$ oder geshiftet im Wesentlichen $H_2 + CO_2$). Sie kann beispielsweise in einem fossil befeuerten Kraftwerk mit $CO_2$-Sequestrierung (Oxyfuel, Pre-Combustion) oder bei der Produktion von Synthesegas (Mischung aus Wasserstoff und Kohlenmonoxid) aus Methan eingesetzt werden. Besonders vorteilhaft ist die vorliegende Erfindung zudem für Membranreaktoren in der chemischen Industrie, wenn stark reduzierende Bedingungen vorherrschen, wie beispielsweise bei der oxidativen Kopplung von Methan (OCM), oxidative Dehydrogenation von Kohlenwasserstoffen, Syngas-Produktion, Zersetzung von Stickoxiden, Wasserzersetzung, CO-Shift-Reaktion etc.

Spezielle Ausführungen zur Erfindung

Nachfolgend wird die Erfindung anhand von einigen Ausführungsbeispielen und Figuren näher erläutert. Dabei zeigen:

Figur 1: Querschnitt einer asymmetrischen Membran mit einer metallischen Hastelloy X Trägerstruktur und einer mittels LPPS-TF darauf aufgebrachten Membranschicht umfassend LSCF.

Figur 2: Querschnitt einer erfindungsgemäßen asymmetrischen Membran mit einer metallischen NiCoCrAlY Trägerstruktur und einer mittels LPPS-TF darauf aufgebrachten Schicht umfassend LSCF.

Figur 3: Sauerstoffpermeation durch eine asymmetrische Membran mit einer metallischen Hastelloy X Trägerstruktur und einer mittels LPPS-TF darauf aufgebrachten Membranschicht umfassend LSCF gemäß Figur 1.

Figur 4: Sauerstoffpermeation durch eine asymmetrische Membran mit einer metallischen NiCoCrAlY Trägerstruktur und einer mittels LPPS-TF darauf aufgebrachten Schicht umfassend LSCF gemäß Figur 2.

Die für die Gastrennung erforderliche funktionale Schicht aus einem mischleitenden Material wurde mittels low pressure plasma spraying - thin film (LPPS-TF) aufgebracht. Das keramische Pulver wird in einen Supersonic Plasma Strahl mit einem dc Plasma Brenner (2000-2200 A) injiziert. Der Plasma Strahl besteht aus einer Ar-He-Gasmischung (80 - 120 slpm (standard liter per minute) Ar, 10 - 40 slpm He) bei sehr hoher Temperatur aufgeschmolzen und teilweise verdampft. Der laminare Plasmastrahl transportiert die Pulverpartikel im Vakuum (200 Pa) mit sehr hoher Geschwindigkeit zum vorgeheizten Substrat (Spritzabstand 800 - 1200 mm), wo sich die Membranschicht abscheidet. Die Substrattemperatur liegt zwischen 700°C und 1000°C. Zusätzlich wird reiner Sauerstoff in die Vakuumkammer gepumpt (1 - 8 slpm), so dass keine Zersetzung des Membranmaterials stattfindet. Mit diesen Parametern wird gewährleistet, dass das Plasma zum Einen eine relativ geringe Enthalpie aufweist, so dass eine Phasenzersetzung des Membranmaterials vermieden wird. Zum Anderen ermöglicht eine geringe Plasmaviskosität sowie eine hohe Partikelgeschwindigkeit eine gute Verdichtung der Schicht. Nach der Beschichtung kühlt die Probe langsam im Vakuum auf Raumtemperatur ab. Dieses Verfahren hat den Vorteil, dass kein zusätzlicher Sinterschritt zum Verdichten der Schicht notwendig ist. Die Schicht ist bereits nach dem Abscheiden gasdicht und gut mit dem Substrat verbunden.

Für das vorgenannte LPPS-TS Aufbringungsverfahren haben sich folgende Parameter als besonders vorteilhaft herausgestellt:

a) Die Brennerleistung sollte mindestens 50 kW netto betragen.

b) Der Druck in der Kammer sollte kleiner als 200 Pa sein.

c) Für die Erzeugung des Plasmas werden in der Regel 80 - 120 slpm (Standardliter pro Minute) Ar sowie 10 - 40 slpm He, vorteilhaft zwischen 10 und 20 slpm He benötigt.

Die Einstellung dieser vorgenannten Parameter stellt sicher, dass das zugeführte Pulver nicht nur aufgeschmolzen sondern auch verdampft wird.

Die folgenden Einstellungen für die Abscheidung einer MIEC-Schicht, insbesondere einer LSCF-Schicht, sind wichtig, damit einerseits die Stöchiometrie der abgeschiedenen Schicht die der angezielten MIEC-Zusammensetzung entspricht und andererseits die Schicht auch dünn und insbesondere gasdicht abgeschieden wird.

d) Das Substrat sollte auf eine Temperatur zwischen 600 °C und 1000 °C vorgeheizt werden, besser auf eine Temperatur zwischen 750 °C und 800 °C.

e) Das MIEC-Pulver sollte mit 15 - 25 g/min zugeführt werden.

f) Speziell für MIEC-Materialien sind zusätzlich mindestens 5 slpm $O_2$ erforderlich, da sonst die diese Misch-Oxide nachteilig reduziert würden.

1. Ausführungsbeispiel

Als Träger wird ein bei ca. 1200 °C ca. 3 h in Wasserstoff vorgesintertes poröses foliengegossenes Stahlsubstrat aus einer Aluminium reichen Nickel-Basis-Legierung (NiCoCrAlY) (45,9 Gew.-% Ni, 22,8 Gew.-% Co, 17,3 Gew.-% Cr, 12,7 Gew.-% Al und 0,6 Gew.-% Y, Dicke: 1 mm, Korngröße 20 - 35 $\mu$m) mit einer Porosität von 35 %verwendet.

In einer Vakuumplasmaspritzanlage (MultiCoat, Sulzer Metco) wird mit einem Brenner O3CP (150 kW) (Sulzer Metco) über LPPS- TF eine 45 $\mu$m dicke Schicht aus dem Membranmaterial mit der Zusammensetzung $La_{0,58}Sr_{0,4}CO_{0,2}Fe_{0,8}O_{3-\delta}$ (LSCF) aufgetragen. Der Plasmabrenner wird mit 2000 A betrieben. Das Plasmagas besteht aus 110 slpm Ar und 10 slpm He. 8 slpm Sauerstoff werden der Kammer zugeführt. Der auf 780 °C vorgeheizte Träger wird mit einem Spritzabstand von 1000 mm für 2 Minuten beschichtet.

Die Membran wird für die Abtrennung reinen Sauerstoffs aus Luft eingesetzt. Die Luft wird auf der Membranseite angeboten, während der Sauerstoff auf der Metallseite abgeführt wird. Das Abführen des Sauerstoffs erfolgt über die Verwendung von Argon als Spülgas.

2. Ausführungsbeispiel

Als Träger wird ein bei ca. 1200°C ca. 3 h in Wasserstoff vorgesintertes poröses foliengegossenes Stahlsubstrat aus einer Aluminium reichen Kobalt-Basis-Legierung (CoNiCrAlY) (38,5 Gew.-% Co, 32 Gew.-% Ni, 21 Gew.-% Cr, 8 Gew.-% Al, 0,5 Gew.-% Y,) (Dicke: 200 - 2000 $\mu$m, Korngröße 20 - 100 $\mu$m) verwendet.

Mittels Nasspulverspritzen oder Siebdruck wird eine poröse Zwischenschicht (Dicke: 10 $\mu$m) aus dem mischleitenden Material $Ba_{0,5}Sr_{0,5}Co_{0,8}Fe_{0,2}O_{3-\delta}$ (BSCF) aufgetragen und bei 1000 °C ca. 3 Stunden an Luft gesintert.

Hierauf wird mittels LPPS- TF eine 20 $\mu$m dicke dichte Schicht aus dem Membranmaterial $Ba_{0,5}Sr_{0,5}Co_{0,8}Fe_{0,2}O_{3-\delta}$ (BSCF) aufgetragen.

Auf die Membranschicht wird mittels Nasspulverspritzen eine 10 $\mu$m dicke poröse Oberflächenschicht aus $Ba_{0,5}Sr_{0,5}Co_{0,8}Fe_{0,2}O_{3-\delta}$ (BSCF) aufgetragen und abschließend bei 1000 °C für 3 Stunden gesintert. Durch das Sintern bei relativ niedrigen Temperaturen vermeidet man eine unerwünschte Verdichtung der porösen Schichten.

Die Membran wird für die Abtrennung reinen Sauerstoffs aus Luft eingesetzt. Die Luft wird auf der Membranseite angeboten, während der Sauerstoff auf der Metallseite abgeführt wird. Das Abführen des Sauerstoffs erfolgt über ein

leichtes Vakuum.

3. <u>Ausführungsbeispiel</u>

Als Träger wird ein bei ca. 1200 °C ca. 3 h in Wasserstoff vorgesintertes poröses foliengegossenes Stahlsubstrat aus einer Aluminium reichen Nickel- bzw. Kobalt-Basis-Legierung (NiCoCrAlY) analog zu Ausführungsbeispiel 2 (d = 200 - 2000 mm, Korngröße 20 - 100 $\mu$m) verwendet.

Hierauf wird mittels LPPS-TF eine 20 $\mu$m dicke dichte Schicht aus dem Membranmaterial z. B. LSCF aufgetragen.

Auf die Membranschicht wird mittels Nasspulverspritzen eine poröse Oberflächenschicht aus einem katalytisch aktiven Material, z. B. LSCF aufgetragen und nicht gesintert. Es ist nicht zwingend erforderlich, dass die Oberflächenschicht und die Membranschicht aus einem identischen Material bestehen. Es erhöht aber die Langzeitstabilität, da man Interdiffusion der unterschiedlichen Elemente vermeidet.

Die Membran wird als Membranreaktor für die partielle Oxidation von Methan zu Syngas ($CH_4$ + ½ $O_2$ -> 2 $H_2$ + CO) eingesetzt. Das Methan wird auf der Metallseite angeboten, wobei das Ni in der Ni-Basis-Legierung als Katalysator für die Reaktion dient. Der Sauerstoff wird mittels Luft auf der Membranseite bereitgestellt.

Mit der Gastrennmembran aus dem Ausführungsbeispiel 1 und einer Vergleichsprobe auf einem Hastelloy X (48,7 Gew.-% Ni, 20,6 Gew.-% Cr, 9,4 Gew.-% Mo, 1,1 Gew.-% Co, 18,5 Gew.-% Fe, 0,8 Gew.-% Si, 0,6 Gew.-% W) Trägersubstrat wurden einerseits Permeationsmessungen vorgenommen und die Proben zudem licht-mikroskopisch (Olympus PMG3 Mikroskop mit Olympus DP25 Digitalkamera) untersucht.

Die Permeationsmessung wurde in einem selbst gebauten Apparat bestimmt, indem auf der Membranseite Sauerstoff mittels eines Luftstroms (250 ml/min) angeboten wird. Auf der Permeatseite wird der Sauerstoff mittels eines Spülgases (50 ml/min Argon) abgeführt und die Volumenanteile von Ar, $O_2$ und $N_2$ des Permeatstroms in einem Massenspektrometer (OmniStar, Pfeiffer Vakuum) quantitativ ermittelt. Der eigens konzipierte Rezipient aus Quarzglas befindet sich in einem elektrisch beheizten Ofen, um die Permeationsrate temperaturabhängig zwischen ca. 650°C und 1000°C zu bestimmen. Die Temperatur wird in der Nähe der Membran mit einem Thermoelement (Typ S) gemessen.

Die Permeationsrate folgt der Wagner-Gleichung

$$j_{O2} = \frac{RT}{16F^2} \frac{1}{L} \sigma_{amb} \ln \frac{p'}{p''}$$

mit $j_{O2}$: Permeationsrate, R: alig. Gaskonstante, F: Faraday-Konstante, L: Membrandicke, $\sigma_{amb}$: ambipolare Leitfähigkeit, p' bzw. p'': Sauerstoffpartialdrücke zu beiden Seiten der Membran.

Sie wird über den Volumenanteil des Sauerstoffs im Permeatgasstrom bestimmt

$$j_{O2} = \frac{F_{Permeat} * (X_{O2} - 0{,}25 * X_{N2})}{A_{Membran}}$$

wobei $F_{Permeat}$ der Volumenstrom des Permeats, $X_{O2}$ und $X_{N2}$ der Volumenanteil Sauerstoff und Stickstoff sowie $A_{Membran}$ die Querschnittsfläche der Membran darstellt. Dabei wird eine mögliche Leckage dergestalt berücksichtigt, dass das Verhältnis von Leckage-Sauerstoff zu Leckage-Stickstoff dem Verhältnis von Luft (1:4) entspricht.

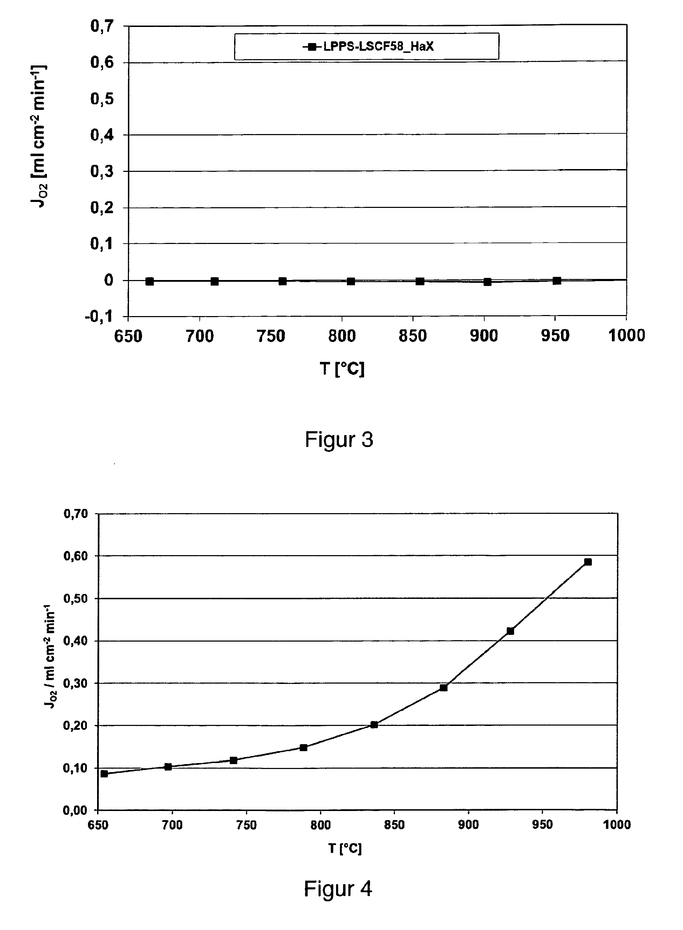

Im Vergleich der Figuren 3 und 4 wird deutlich, dass dieselbe Aufbringungsmethode (hier LPPS-TF) für die Membranschicht (LSCF) unter sonst identischen Rahmenbedingungen auf unterschiedliche metallische Träger unterschiedliche Auswirkungen zeigt.

Während die Kombination Hastelloy X Träger mit aufgebrachter LSCF Membranschicht unabhängig von der Temperatur kaum eine von 0 verschiedene Permeationsrate für Sauerstoff zeigt, erkennt man bei der Kombination NiCoCrAlY-Träger mit aufgebrachter LSCF Membranschicht deutlich den Anstieg des Permeationsflusses $J_{O2}$ mit der Temperatur bis hin zu knapp 0,6 ml /($cm^2$ * min).

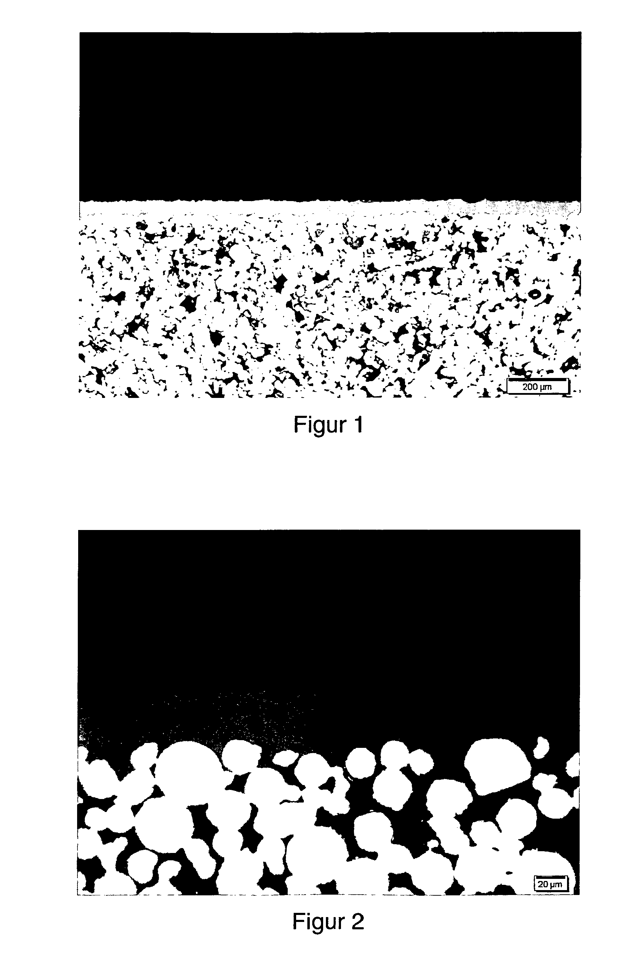

Ein Grund für die vorgenannten so unterschiedlich ausfallenden Permeationsmessungen kann möglicherweise in den Figuren 1 und 2 gesehen werden. Hier zeigen Querschnitte die unterschiedlichen Strukturen der beteiligten Schichten in den beiden Schichtsystemen Träger /Membranschicht. Während bei der erfindungsgemäßen Kombination NiCoCrAlY-Träger mit LPPS-TF Membranschicht aus LSCF (siehe Figur 2) die Struktur der porösen Trägerschicht bis hin zur Grenzfläche Träger/Membranschicht unverändert porös vorlegt, zeigt die Kombination Hastelloy X Träger mit LPPS-TF Membranschicht aus LSCF (siehe Figur 1) eine deutliche Verdichtung im Bereich der Grenzfläche Träger/Membrannschicht, die die schlechten Permeationswerte für dieses System erklärt.

**Patentansprüche**

1.  Asymmetrische Membran zur Gastrennung umfassend eine poröse Trägerstruktur und eine Funktionsschicht, **dadurch gekennzeichnet, dass**

    - die Trägerstruktur ein Metall umfasst, welches an Luft bei Temperaturen oberhalb von 600 °C eine stabile Oxidschicht auszubilden vermag,
    - die Trägerschicht eine Porosität von mehr als 30 Vol.-% aufweist,
    - die Trägerschicht einen thermischen Ausdehnungskoeffizienten von größer als 12 bis 16 * $10^{-6}$ $K^{-1}$ aufweist,
    - die Trägerstruktur eine Schichtdicke zwischen 0,5 und 2 mm aufweist,
    - die Funktionsschicht ein gemischt Ionen und Elektronen leitendes Material umfasst,
    - die Funktionsschicht eine Schichtdicke zwischen 0,3 und 200 $\mu$m aufweist,

    und wobei die asymmetrische Membran bei Temperaturen oberhalb von 750 °C einen Permeationsfluss von wenigstens 0,1 ml /($cm^2$ * min) und bei Temperaturen oberhalb von 850 °C einen Permeationsfluss von wenigstens 0,2 ml /($cm^2$ * min) aufweist.

2.  Asymmetrische Membran nach Anspruch 1, mit einer Trägerstruktur umfassend eine Ni/Co-Basislegierung mit einem Al-Anteil von mehr als 4 Gew.-%, insbesondere eine NiCoCrAlY- oder FeCrAlY-Legierung.

3.  Asymmetrische Membran nach Anspruch 1 bis 2, mit einer Trägerstruktur, die eine Schichtdicke zwischen 1 und 2 mm aufweist.

4.  Asymmetrische Membran nach Anspruch 1 bis 3, bei der die Trägerstruktur eine gradierte Porosität aufweist.

5.  Asymmetrische Membran nach Anspruch 1 bis 4, mit einer Funktionsschicht umfassend ein Perowskit mit der allgemeinen Zusammensetzung $AA'BB'O_{3-\delta}$.

6.  Asymmetrische Membran nach Anspruch 1 bis 5, mit einer Funktionsschicht, die eine Schichtdicke zwischen 3 und 150 $\mu$m aufweist.

7.  Asymmetrische Membran nach Anspruch 1 bis 6, mit einer Funktionsschicht umfassend $La_{0,58}Sr_{0,4}Co_{0,2}Fe_{0,8}O_{3-\delta}$ (LSCF) oder $Ba_{0,5}Sr_{0,5}Co_{0,8}Fe_{0,2}O_{3-\delta}$ (BSCF) .

8.  Asymmetrische Membran nach Anspruch 1, **dadurch gekennzeichnet, dass** zwischen der Funktionsschicht und der Trägerstruktur eine keramische Zwischenschicht angeordnet ist, wobei

    - die Zwischenschicht ein gemischt Ionen und Elektronen leitendes Material umfasst,
    - die Zwischenschicht Porengrößen zwischen 1 und 5 $\mu$m aufweist,
    - die Zwischenschicht eine Schichtdicke zwischen 1 und 10 $\mu$m aufweist.

9.  Asymmetrische Membran nach Anspruch 8, mit einer Zwischenschicht aus einem Perowskiten mit der allgemeinen Zusammensetzung $AA'BB'O_{3-\delta}$

10. Verfahren zur Herstellung einer asymmetrische Membran zur Gastrennung nach einem der vorhergehenden Ansprüche, mit den Schritten

    - es wird ein metallischer Träger eingesetzt, der an Luft bei Temperaturen oberhalb von 600 °C eine stabile Oxidschicht auszubilden vermag, eine Porosität von mehr als 30 Vol.-%, einen thermischen Ausdehnungskoeffizienten von größer als 12 * $10^{-6}$ $K^{-1}$ und eine Schichtdicke zwischen 0,2 und 3 mm aufweist,
    - auf die metallische Trägerschicht wird ein gemischt Ionen und Elektronen leitendes Material als Funktionsschicht mit einer Schichtdicke zwischen 0,3 und 200 $\mu$m aufgebracht, wodurch ohne weitere sich anschließende Prozessschritte eine gasdichte Funktionsschicht erzeugt wird.

11. Verfahren nach vorhergehendem Anspruch 10, bei dem die Funktionsschicht mittels low pressure plasma spraying-

thin film (LPPS-TF) aufgebracht wird.

12. Verfahren nach Anspruch 10 oder 11, bei dem auf die metallische Trägerschicht zunächst eine keramische Zwischenschicht aufgebracht wird, bevor darauf das gemischt Ionen und Elektronen leitende Material als Funktionsschicht aufgebracht wird.

13. Verfahren nach einem der Ansprüche 10 bis 12, bei dem ein metallischer Träger umfassend eine Ni/Co-Basisiegierung mit einem Al-Anteil von mehr als 4 Gew.-%, insbesondere eine NiCoCrAlY- oder FeCrAlY-Legierung eingesetzt wird.

14. Verfahren nach einem der Ansprüche 10 bis 13, bei dem ein gemischt Ionen und Elektronen leitendes Material als Funktionsschicht umfassend $La_{0,58}Sr_{0,4}Co_{0,2}Fe_{0,8}O_{3-\delta}$ (LSCF) oder $Ba_{0,5}Sr_{0,5}Co_{0,8}Fe_{0,2}O_{3-\delta}$ (BSCF) eingesetzt wird.

Figur 1

Figur 2

Figur 3

Figur 4

Europäisches
Patentamt

European
Patent Office

Office européen
des brevets

## EUROPÄISCHER RECHERCHENBERICHT

Nummer der Anmeldung

EP 13 00 1473

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 030 673 A1 (UNIV DENMARK TECH DTU [DK]) 4. März 2009 (2009-03-04)<br>* Absätze [0030] - [0034], [0042], [0051], [0057], [0072] *<br>* das ganze Dokument *<br>----- | 1-14 | INV.<br>B01D67/00<br>B01D53/22<br>B01D69/10<br>B01D71/02<br>C01B13/02 |
| X | US 2005/013933 A1 (CHEN HANCUN [US] ET AL) 20. Januar 2005 (2005-01-20)<br>* Absatz [0018]; Beispiel 1 *<br>* das ganze Dokument *<br>----- | 1-13 | |
| X | US 7 229 537 B2 (CHEN JACK C [US] ET AL) 12. Juni 2007 (2007-06-12)<br>* Spalte 8, Zeile 39; Beispiel 1 *<br>* Spalte 9, Zeilen 13-31 *<br>* das ganze Dokument *<br>----- | 1-14 | |
| X | Ye Xing: "Development of Thin Film Oxygen TransportMembranes on Metallic Supports", Schriften des Forschungszentrums Jülich Energie & Umwelt,<br>Bd. 130<br>20. März 2012 (2012-03-20), XP002699809,<br>ISSN: 1866-1793<br>ISBN: 978-3-89336-765-8<br>Gefunden im Internet:<br>URL:http://juwel.fz-juelich.de:8080/dspace/bitstream/2128/4549/1/Energie%26Umwelt_130.pdf<br>[gefunden am 2013-06-26]<br>* Kapitel 3.1;<br>Seiten 67,87-90; Abbildung 4.1; Tabelle 4.4 *<br>* das ganze Dokument *<br>-----<br>-/-- | 1-14 | RECHERCHIERTE SACHGEBIETE (IPC)<br><br>B01D<br>C01B |

Der vorliegende Recherchenbericht wurde für alle Patentansprüche erstellt

| Recherchenort | Abschlußdatum der Recherche | Prüfer |
|---|---|---|
| München | 2. Juli 2013 | Hennebrüder, K |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

  ............................................................................................

& : Mitglied der gleichen Patentfamilie, übereinstimmendes
  Dokument

EPO FORM 1503 03.82 (P04C03)

**Europäisches Patentamt**
**European Patent Office**
**Office européen des brevets**

# EUROPÄISCHER RECHERCHENBERICHT

**Nummer der Anmeldung**

EP 13 00 1473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Special Metals Corporation: "Incoloy alloy MA956", , 4. September 2004 (2004-09-04), XP002699382, Gefunden im Internet: URL:http://www.specialmetals.com/documents /Incoloy%20alloy%20MA956.pdf * das ganze Dokument * ----- | 2,13 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 2. Juli 2013 | Hennebrüder, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 00 1473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2013

| Im Recherchenbericht angeführtes Patentdokument | Datum der Veröffentlichung | Mitglied(er) der Patentfamilie | Datum der Veröffentlichung |
|---|---|---|---|
| EP 2030673 A1 | 04-03-2009 | CN 101795756 A<br>EP 2030673 A1<br>EP 2183044 A1<br>US 2011132772 A1<br>WO 2009027101 A1 | 04-08-2010<br>04-03-2009<br>12-05-2010<br>09-06-2011<br>05-03-2009 |
| US 2005013933 A1 | 20-01-2005 | CA 2531811 A1<br>CN 101304812 A<br>EP 1648601 A2<br>JP 2007526109 A<br>US 2005013933 A1<br>WO 2005023407 A2 | 17-03-2005<br>12-11-2008<br>26-04-2006<br>13-09-2007<br>20-01-2005<br>17-03-2005 |
| US 7229537 B2 | 12-06-2007 | CA 2531884 A1<br>CN 1819915 A<br>EP 1644183 A1<br>JP 2007527468 A<br>US 2005061663 A1<br>WO 2005009730 A1 | 03-02-2005<br>16-08-2006<br>12-04-2006<br>27-09-2007<br>24-03-2005<br>03-02-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0732139 B2
- WO 2005009730 A1
- WO 0193987 A

**In der Beschreibung aufgeführte Nicht-Patentliteratur**

- **Y. XING ; S. BAUMANN ; D. SEBOLD ; M. RÜTTINGER ; A. VENSKUTONIS ; W. A. MEULENBERG ; D. STÖVER.** Chemical compatibility investigation of thin-film oxygen transport membrane on metallic substrates. *Journal of the American Ceramic Society,* 2011, vol. 94 (3), 861-866
- **M. GINDRAT ; H.-M. HÖHLE ; K. VON NIESSEN ; PH. GUITTIENNE ; D. GRANGE ; CH. HOLLENSTEIN.** *Plasma Spray-CVD: A New Thermal Spray Process to Produce Thin Films from Liquid or Gaseous Precursors,* 14. Dezember 2010
- *Journal of Thermal Spray Technology,* 1992, vol. 1
- *JOURNAL OF THERMAL SPRAY TECHNOLOGY,* 2012, vol. 21
- **V. V. KHARTON ; F. M. B. MARQUES.** Mixed ionic-electronic conductors: effects of ceramic microstructure on transport properties. *Current Opinion in Solid State and Materials Science,* Juni 2002, vol. 6 (3), 261-269
- **S. P. S. BADWAL ; F. T. CIACCHI.** Ceramic Membrane Technologies for Oxygen Separation. *Advanced Materials,* 2001, vol. 13, 993-996
- **YE XING.** Development of Thin Film Oxygen Transport Membranes on Metallic Supports. *Bochum,* 2011